# EUROPEAN PATENT SPECIFICATION

(11) **EP 3 072 732 B1**
(45) Date of publication and mention of the grant of the patent: **13.05.2020**
(21) Application number: 14863398.5
(22) Date of filing: 04.08.2014
(51) Int. Cl.: B60N 2/36, B60N 2/30, B60N 2/015

(54) **VEHICLE SEAT DEVICE**
FAHRZEUGSITZVORRICHTUNG
DISPOSITIF DE SIÈGE DE VÉHICULE

(30) Priority: 19.11.2013 JP 2013238418
(43) Date of publication of application: 28.09.2016
(73) Proprietor: Mitsubishi Jidosha Kogyo Kabushiki Kaisha, Tokyo 108-8410 (JP); Mitsubishi Jidosha Engineering Kabushiki Kaisha, Aichi 444-8501 (JP)
(72) Inventor: TAKAHAMA, Masayoshi, Tokyo 108-8410 (JP); YAMASHITA, Hisao, Okazaki-shi, Aichi 444-8501 (JP); IWATSUKI, Toshihito, Okazaki-shi, Aichi 4448501 (JP); MAEKAWA, Ritsuki, Okazaki-shi, Aichi 444-8501 (JP)
(74) Representative: Vossius & Partner Patentanwälte Rechtsanwälte mbB
(86) International application number: PCT/JP2014/070464
(87) International publication number: WO 2015/075974

(56) References cited:
- JP-A- 2005 145 289
- JP-A- 2005 145 289
- JP-A- 2007 302 125
- JP-A- 2007 302 125

## Description

### TECHNICAL FIELD

This invention relates to a vehicle seat device equipped with a stowable seat.

### BACKGROUND ART

For the purpose of widening a vehicle luggage room, there has been proposed a vehicle seat device equipped with a stowable seat which allows an occupant to be seated in the service state, and is movable with the seat backrest folded onto the top face of a seat cushion, to be stowed on the floor or into a stowing part provided on the floor.

With such vehicle seat device, a wider luggage room will be made available by bringing the seat into the stowed state.

The seat in the stowed state, however, tends to be destabilized, if there is a gap between the back face of the seat cushion and the floor, since the folded seat can pivot around the support shaft.

Dedicated support members are then provided on the back face of the seat cushion respectively in the front part and rear part thereof, making these front and rear support members support the seat (see Patent Literatures 1 and 2) .

Patent Literature 3 describes a retractable vehicular seat device. The device selectively movably supports a single seat in a seat installation surface and a storage recessed part, which are juxtaposed and formed in front and in rear of the vehicle floor surface. The device has an attitude control wire for controlling an attitude of a seat against force of a rotary energizing means, by loosening when positioned in a seat using position and a storage position, and by extending by the force of the rotary energizing means when rotating in a predetermined range between the seat using position and the storage position. The device further includes a floor surface fixing member formed as a member separate from the seat and the vehicle floor surface and fixed to the vehicle floor surface. The floor surface fixing member supports one end part of a rotary arm and one end part of the attitude control wire. The seat, the rotary arm, the rotary energizing means, the attitude control wire and the floor surface fixing member, are unitized in a state before being installed on the vehicle floor surface.

Patent Literature 4 describes a vehicle seat. The seat comprises a seat cushion frame provided in a seat cushion, a cushion rubber provided on a lower side of the seat in the seat cushion frame and in contact with a floor portion of a vehicle in a seat storage state, and a relative moving means for relatively moving the cushion rubber side relative to the cushion frame side, wherein the relative moving means is attached to the seat cushion frame.

### CITATION LIST

### PATENT LITERATURE

Patent Literature 1: JP-B2-5164349
Patent Literature 2: JP-A-2007-15532
Patent Literature 3: JP 2005 145289 A
Patent Literature 4: JP 2007 302125 A

### SUMMARY OF THE INVNETION

### TECHNICAL PROBLEM

The prior arts, however, need to provide the dedicated support members on the back face of the seat cushion respectively in the front part and rear part, leaving a room for reducing the number of parts to reduce the cost.

This invention, in consideration of the above-described circumstances, is to provide a vehicle seat device which is advantageous in reducing the number of parts and in reducing the cost.

### SOLUTION TO PROBLEM

According to this invention aimed at accomplishing the object, there is provided a combination of a vehicle seat device and a vehicle floor on which the vehicle seat device is disposed, wherein the vehicle floor includes a floor part and a deck part which occupies a rear part of the floor part composing the vehicle floor and has an elevated floor level from above the floor part, which includes: a seat movable between a service state, in which the seat is placed on the deck part so as to allow an occupant to be seated, and a stowed state in which the seat is stowed on the floor part, with a seat backrest folded onto a seat cushion; a support leg having one end pivotally coupled to the floor part and the other end pivotally coupled to the seat cushion, kept raised in the service state, meanwhile swung forward and kept laid down in the stowed state; and an attitude control strap which is stretched between the floor part side and a rear end of the seat cushion, and restricts inclination of the seat when the seat is moved; the floor part being provided with a strap attaching member to which one longitudinal end of the attitude control strap is attached; and the strap attaching member being configured to support a rear part of the seat cushion in the stowed state.

### ADVANTAGEOUS EFFECTS OF INVENTION

According to this invention, since the vehicle seat device is configured to support a rear part of the seat cushion in the stowed state, making use of the strap attaching member to which the attitude control strap is attached, so that unlike the conventional practice, it is no more necessary to provide the dedicated support member for the rear part of the back face of the seat cushion, making the vehicle seat device advantageous in reducing the number of parts and in reducing the cost.

### BRIEF DESCRIPTION OF DRAWINGS

[FIG. 1] An explanatory drawing illustrating a service state of a seat in a vehicle seat device of an embodiment.
[FIG. 2] An explanatory drawing illustrating a stowed state of the seat in the vehicle seat device according to the embodiment.
[FIG. 3] An explanatory drawing illustrating an intermediate state of movement of the seat in the vehicle seat device according to the embodiment.
[FIG. 4] A schematic perspective view illustrating a seat frame of the vehicle seat device according to the embodiment.
[FIG. 5] A perspective view illustrating a support mechanism in the stowed state of the seat in the vehicle seat device according to the embodiment.
[FIG. 6] A side elevation of the support mechanism in the stowed state of the seat in the vehicle seat device according to the embodiment.

### DESCRIPTION OF EMBODIMENTS

An embodiment of this invention will be explained below, referring to the attached drawings.

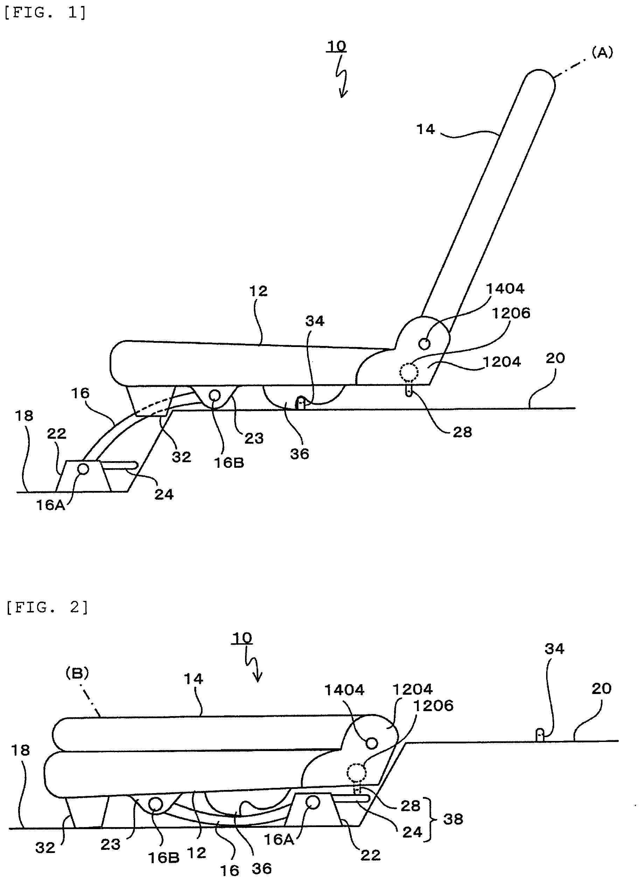

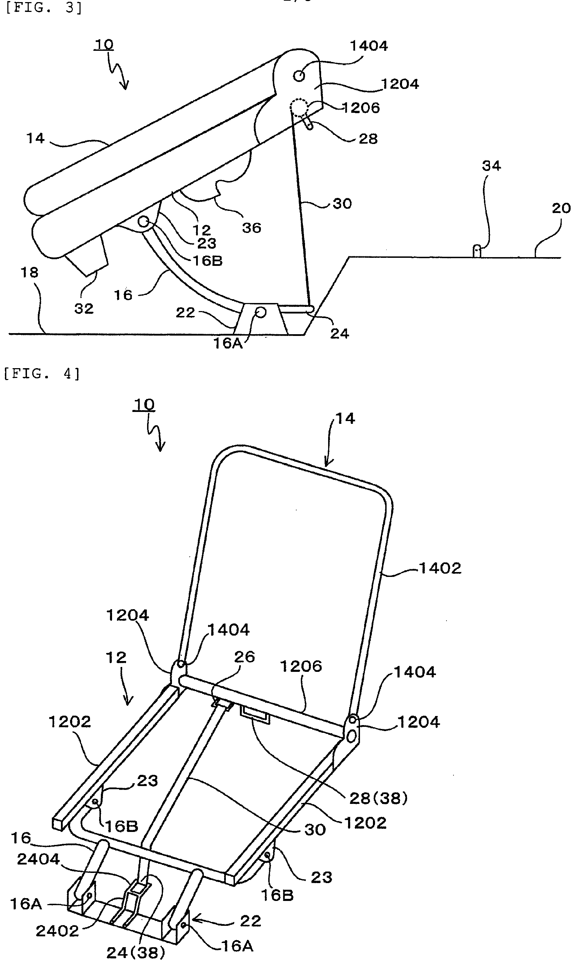

FIG. 1 illustrates the service state of a rear seat 10, FIG. 2 illustrates the stowed state of the rear seat 10, and FIG. 3 illustrates the intermediate state of movement, between the service state and the stowed state, of the rear seat 10.

As illustrated in FIG. 1, the vehicle floor on which the rear seat 10 is placed is composed of a floor part 18 located in the front, and a deck part 20 located in the rear, and having an elevated floor level from above the floor part 18.

The rear seat 10 has a seat cushion 12 which configures the seat face, a seat backrest 14 provided to the rear end of the seat cushion 12 in a reclinable manner, and a support leg 16 which connects the seat cushion 12 and the floor part 18.

The rear seat 10 is configured to be movable between a service state (A) in which, as illustrated in FIG. 1, the seat cushion 12 is placed on the deck part 20 having an elevated floor level from above the floor part 18, with the seat backrest 14 unfolded so as to allow an occupant to be seated; and a stowed state (B) in which, as illustrated in FIG. 2, the seat is stowed on the floor part 18 in the front, with the seat backrest 14 folded onto the seat cushion 12. The design aims to widen the luggage room, by bringing the rear seat 10 into the stowed state (B).

The structure will be detailed below.

The seat cushion 12 configures a seating part on which an occupant can sit thereon, and is typically placed above the deck part 20 in the service state (A). To a lower part of the seat cushion 12, there is coupled one end of the support leg 16 coupled to the floor part 18, thereby the seat cushion 12 is coupled by way of the support leg 16 to the floor part 18. The seat cushion 12 also has a latch mechanism 36 which is engageable with a striker 34 provided to the deck part 20, and is fixed to the deck part 20 with the aid of the latch mechanism 36.

The seat backrest 14, in the service state (A), is kept raised vertically. The seat backrest 14 has a reclining mechanism, allowing the front-back reclining thereof relative to the seat cushion 12, and folding thereof onto the seat cushion 12. Although not detailed here, the latch mechanism 36 of the seat cushion 12 is disengaged from the striker 34, when the seat backrest 14 is folded onto the seat cushion 12.

One end of the support leg 16 is coupled to a bracket 22 provided on the floor part 18 by way of a support shaft 16A, so as to be pivotable back and forth, and the other end of the support leg 16 is coupled to a bracket 23 on the back face of the seat cushion 12 by way of a support shaft 16B, so as to be pivotable back and forth. In other words, the support leg 16 is made pivotable back and forth around the support shaft 16A, and is kept raised in the service state (A), and swung forward and kept laid down in the stowed state (B).

Next, referring to FIG. 1 to FIG. 3, movement of the individual components of the rear seat 10 in the service state (A), stowed state (B), and intermediate state of movement will be explained.

As illustrated in FIG. 1, the rear seat 10 is brought into the service state (A) by raising the support leg 16 so as to place the seat cushion 12 above the deck part 20, and by unfolding the seat backrest 14. In the service state (A), the seat cushion 12 is fixed to the deck part 20 by engaging the latch mechanism 36 to the striker 34 on the deck part 20, and thereby the rear seat 10 is kept immobile.

When the seat backrest 14 is folded onto the seat cushion 12 by operating the reclining mechanism, the latch mechanism 36 is disengaged while interlocked with movement of the seat backrest 14, and is released from the striker 34. Although not illustrated, a joint part of the support leg 16 with the bracket 22 is provided with a spring member which energizes the support leg 16 frontward, with which the rear seat 10 is kept floated slightly above the deck part 20 upon disengagement of the latch mechanism 36, and is made movable frontward.

When the rear seat 10 is moved frontward while being lifted up, the support leg 16 is swung forward around the support shaft 16A as illustrated in FIG. 3, and thereby the rear seat 10 moves from the deck part 20 above the floor part 18. Between the floor part 18 side and the rear end of the seat cushion 12, there is provided an attitude control strap 30 while stretched between them, so as to restrict the attitude of the rear seat 10.

When the rear seat 10 is brought down from the state illustrated in FIG. 3, the support leg 16 is swung forward and kept laid down below the seat cushion 12 as illustrated in FIG. 2, and the rear seat 10 is moved above the floor part 18 and is brought into the stowed state (B). In the stowed state (B), the stopper 32 buts against the floor part 18 to support a front part of the seat cushion 12, and a support mechanism 38 described later supports a rear part of the seat cushion 12.

Next, a configuration involving the support mechanism 38, which characterizes this invention, will be explained.

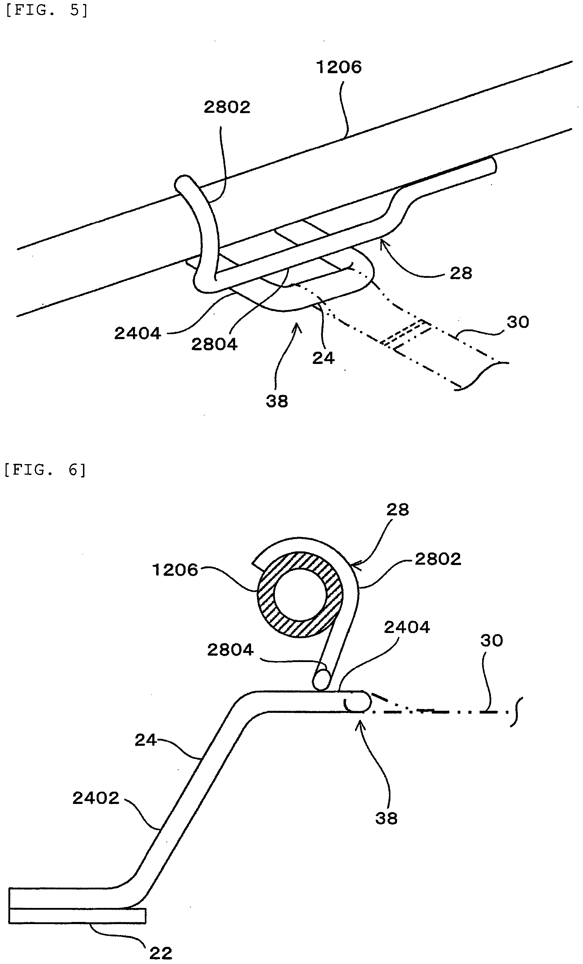

FIG. 4 is a schematic drawing of a frame of the rear seat 10, and FIG. 5 and FIG. 6 are a perspective view and a side elevation, respectively, of the support mechanism 38 in the stowed state (B).

As illustrated in FIG. 4 and FIG. 6, the support bracket 22 has, provided thereto so as to protrude therefrom, a strap fixture 24 (strap attaching member) to which one end of the attitude control strap 30 is attached.

Although the strap fixture 24 might otherwise be provided directly to the floor part 18, such way of provision of the strap fixture 24 while integrated with the support bracket 22 can facilitate provision of the strap fixture 24 to the floor part 18 side, as compared with the direct provision of the strap fixture 24 to the floor part 18.

The strap fixture 24 is formed by bending an elastic rod member.

The strap fixture 24 is composed of a leg part 2402 which is welded to the support bracket 22 so as to rise upward, and a support part 2404 which is connected to the upper end of the leg part 2402, while placing a bent portion in between, thereby to extend rearward. The leg part 2402 obliquely rises up in such a manner that the higher the portion thereof, the more largely it recesses backward, and the support part 2404 extends in parallel with the floor part 18. With such configuration, as described later, the support part 2404 can receive the load from the contact fixture 28 in a stable manner, the leg part 2402 can more easily bend upon butting of the contact fixture 28 against the support part 2404, claiming a large advantage in cushioning the impact.

The strap fixture 24 is elastically deformable. The attitude control strap 30 is attached to the rear end of the support part 2404.

As illustrated in FIG. 4, the frame of the seat cushion 12 has a pair of side frames 1202 mutually spaced in the vehicle-width direction and individually extend in the front-back direction, flanges 1204 respectively attached to the rear ends of the pair of side frames 1202, and a pipe frame 1206 (frame member) which extends in the vehicle-width direction and interconnects the flanges 1204.

To the pipe frame 1206, there is provided a metal fixture 26 (attaching part) to which the other end of the attitude control strap 30 is attached.

The metal fixture 26 is formed by bending a rod member, and is welded to the pipe frame 1206.

In a middle part in the longitudinal direction of the pipe frame 1206, there is provided a contact fixture 28 (contact member), which can but against the support part 2404 of the strap fixture 24 in the stowed state (B), so as to protrude downward.

As illustrated in FIG. 5 and FIG. 6, the contact fixture 28 is formed by bending an elastic rod member, and is welded to a position of the pipe frame 1206 deviated in the vehicle-width direction from the metal fixture 26.

The contact fixture 28 is composed of a leg part 2802 which is welded to the pipe frame 1206 so as to extend downward, and a bottom part 2804 which is connected by way of a bent portion to the lower end of the leg part 2802 and extends in the vehicle-width direction.

In the stowed state (B), the bottom part 2804 of the contact fixture 28 buts against the support part 2404 of the strap fixture 24, the middle part in the longitudinal direction of the pipe frame 1206 is therefore supported by the support part 2404 while placing the contact fixture 28 in between, and thereby the seat cushion 12 is supported at the rear end in a stable manner.

The bottom part 2804 of the contact fixture 28 buts against a portion of the support part 2404, ahead of the portion where the attitude control strap 30 is attached. In other words, by locating a portion where the contact fixture 28 is butted differently from a portion where the attitude control strap 30 is attached, the attitude control strap 30 now enjoys an enhanced durability.

As illustrated in FIG. 4, the seat backrest 14 has a frame 1402 formed by bending a pipe member into a U-shape. Both ends of the frame 1402 are pivotally coupled by way of a support shaft 1404 to the flanges 1204.

The attitude control strap 30 is provided so as to be stretched between the strap fixture 24 and the metal fixture 26.

When the rear seat 10 reclines forward in an intermediate state of movement between the service state (A) and the stowed state (B), with a tendency of elevation of the rear end of the rear seat 10 (seat cushion 12), the attitude control strap 30 is stretched as illustrated in FIG. 3 between the strap fixture 24 and the metal fixture 26 to restrict the elevation, and thereby the rear seat 10 is prevented from excessively reclining forward. In this way, the attitude of the rear seat 10 during movement is controlled, to smoothen operation for the movement.

In this embodiment, as illustrated in FIG. 2, FIG. 5 and FIG. 6, the strap fixture 24 and the contact fixture 28 come into contact in the stowed state (B), and the pipe frame 1206 at the rear end of the seat cushion 12 in the stowed state (B) is supported. In other words, since the contact fixture 28 is supported with the strap fixture 24, the seat cushion 12 is supported at the rear part thereof. Again in other words, the strap fixture 24 and the contact fixture 28 configure the support mechanism 38 which supports the rear part of the seat cushion 12 in the stowed state (B) .

Incidentally, the front part of the seat cushion 12 in the stowed state (B) is supported, as illustrated in FIG. 2, by placing the stopper 32, attached to the back face of the seat cushion 12, on the floor 18.

According to this embodiment, since the vehicle seat device is configured to support the rear part of the seat cushion 12 in the stowed state (B), making use of the strap fixture 24 to which the attitude control strap 30 is attached, so that unlike the conventional practice, it is no more necessary to provide the dedicated support member for the rear part of the back face of the seat cushion 12, claiming an advantage in reducing the number of parts and in reducing the cost. In addition, it is no more necessary to specially reinforce the seat cushion 12 side, since the pipe frame 1206 of the seat cushion 12 is supported.

When the seat backrest 14 is loaded with luggage on the back face thereof, the load of the luggage is applied, in the rear part of the seat cushion 12, from the pipe frame 1206 via the contact fixture 28 to the strap fixture 24. Accordingly, the luggage may stay on the back face of the seat backrest 14 in the stable manner.

Since the strap fixture 24 is elastic, and is bent between the leg part 2402 and the support part 2404, the strap fixture 24, upon butted with the contact fixture 28 when the rear seat is brought into the stowed state (B), can deform as a whole, so that impact of stowage may be reduced, making it advantageous to smoothly bringing the seat into the stowed state (B).

Since the portion of the strap fixture 24 where the bottom part of the contact fixture 28 is butted is located differently from the portion where the strap fixture 24 with the attached attitude control strap 30 is provided, the attitude control strap 30 now advantageously enjoys an enhanced durability.

### REFERENCE SIGNS LIST

- 10: rear seat (seat)
- 12: seat cushion
- 14: seat backrest
- 16: support leg
- 18: floor part
- 20: deck part
- 22: support bracket
- 24: strap fixture (attaching member)
- 26: metal fixture (attaching part)
- 28: contact fixture (contact member)
- 30: attitude control strap
- 32: stopper
- 38: support mechanism

## Claims

1. A combination of a vehicle seat device and a vehicle floor on which the vehicle seat device is disposed, wherein the vehicle floor includes a floor part (18) and a deck part (20) which occupies a rear part of the floor part (18) composing the vehicle floor and has an elevated floor level from above the floor part (18), comprising:
a seat (10) movable between a service state in which the seat (10) is placed on the deck part (20) so as to allow an occupant to be seated, and a stowed state in which the seat (10) is stowed on the floor part (18), with a seat backrest (14) folded onto a seat cushion (12);
a support leg (16) having one end pivotally coupled to the floor part (18) and the other end pivotally coupled to the seat cushion (12), kept raised in the service state, meanwhile swung forward and kept laid down in the stowed state; and
an attitude control strap (30) which is stretched between the floor part side and a rear end of the seat cushion (12), and restricts inclination of the seat (10) when the seat (10) is moved,
the floor part (18) being provided with a strap attaching member (24) to which one longitudinal end of the attitude control strap (30) is attached, and
the strap attaching member (24) being configured to support a rear part of the seat cushion (12) in the stowed state.

2. The combination of a vehicle seat device and a vehicle floor according to Claim 1,
wherein the floor part (18) is provided with a bracket to which the support leg (16) is attached,
one end of the support leg (16) is pivotally coupled by way of the bracket to the floor part (18), and
the strap attaching member (24) is provided to the bracket.

3. The combination of a vehicle seat device and a vehicle floor according to Claim 1 or 2,
wherein the seat cushion (12) is provided with a frame member which extends in the width direction of vehicle, and
the strap attaching member (24) in the stowed state is positioned below the frame member to support the frame member.

4. The combination of a vehicle seat device and a vehicle floor according to Claim 3,
wherein the frame member of the seat cushion (12) is provided with a contact member which extends downward from the frame member, and is capable of butting against the strap attaching member (24) in the stowed state,
supporting of the rear part of the seat cushion (12) is embodied by supporting the contact member with the strap attaching member (24), and
a portion of the strap attaching member (24) where the attitude control strap (30) is attached is located differently from a portion of the strap attaching member (24) where the contact member is butted.

5. The combination of a vehicle seat device and a vehicle floor according to Claim 4,
wherein the contact member is provided at a middle part, in the longitudinal direction, of the frame member, and
supporting of the rear part of the seat cushion (12) is embodied by supporting a middle part, in the longitudinal direction, of the frame member by way of the contact member with the strap attaching member (24).

6. The combination of a vehicle seat device and a vehicle floor according to Claim 4 or 5,
wherein the strap attaching member (24) is composed of an elastic member, and has:
a leg part which extends upward from the floor part (18) or from the bracket; and
a support part which extends rearward from the leg part to which the attitude control strap (30) is attached, and against which the contact member is butted.

7. The combination of a vehicle seat device and a vehicle floor according to Claim 6,
wherein the leg part obliquely rises up in such a manner that the higher the portion thereof, the more largely it recesses backward, and the support part extends in parallel with the floor part (18).

8. The combination of a vehicle seat device and a vehicle floor according to any one of Claims 4 to 7,
wherein an attaching part, to which the other longitudinal end of the attitude control strap (30) is attached, is provided to the frame member.

9. The combination of a vehicle seat device and a vehicle floor according to Claim 8,
wherein the attaching part to which the other end is attached is provided at a position of the frame member deviated in the longitudinal direction thereof from the contact member.

10. The combination of a vehicle seat device and a vehicle floor according to any one of Claims 1 to 9,
wherein the seat cushion (12) is provided with a stopper on the front back face thereof, and is supported in the stowed state at the front part thereof by the stopper butted to the floor part (18).

## Patentansprüche

1. Kombination aus einer Fahrzeugsitzvorrichtung und einem Fahrzeugboden, auf dem die Fahrzeugsitzvorrichtung angeordnet ist, wobei der Fahrzeugboden ein Bodenteil (18) und ein Deckteil (20) aufweist, das einen hinteren Teil des den Fahrzeugboden bildenden Bodenteils (18) belegt und eine erhöhte Bodenhöhe von oberhalb des Bodenteils (18) hat, mit:
einem Sitz (10), der zwischen einem Nutzungszustand, in dem der Sitz (10) auf dem Deckteil (20) platziert ist, damit ein Insasse sitzen kann, und einem Verstauzustand beweglich ist, in dem der Sitz (10) auf dem Bodenteil (18) mit einer auf ein Sitzpolster (12) geklappten Sitzrückenlehne (14) verstaut ist;
einem Stützfuß (16) mit einem Ende, das mit dem Bodenteil (18) schwenkbar gekoppelt ist, und dem anderen Ende, das mit dem Sitzpolster (12) schwenkbar gekoppelt ist, der im Nutzungszustand aufgestellt bleibt, während er im Verstauzustand nach vorn geschwenkt ist und hingelegt bleibt; und
einem Lagekontrollband (30), das zwischen der Bodenteilseite und einem hinteren Ende des Sitzpolsters (12) gespannt ist und Neigung des Sitzes (10) einschränkt, wenn der Sitz (10) bewegt wird,
wobei das Bodenteil (18) mit einem Bandbefestigungsbauteil (24) versehen ist, an dem ein Längsende des Lagekontrollbands (30) befestigt ist, und
das Bandbefestigungsbauteil (24) so konfiguriert ist, dass es einen hinteren Teil des Sitzpolsters (12) im Verstauzustand stützt.

2. Kombination aus einer Fahrzeugsitzvorrichtung und einem Fahrzeugboden nach Anspruch 1,
wobei das Bodenteil (18) mit einer Halterung versehen ist, an der der Stützfuß (16) befestigt ist,
ein Ende des Stützfußes (16) über die Halterung mit dem Bodenteil (18) schwenkbar gekoppelt ist und
das Bandbefestigungsbauteil (24) an der Halterung vorgesehen ist.

3. Kombination aus einer Fahrzeugsitzvorrichtung und einem Fahrzeugboden nach Anspruch 1 oder 2,
wobei das Sitzpolster (12) mit einem Rahmenbauteil versehen ist, das sich in Breitenrichtung des Fahrzeugs erstreckt, und
im Verstauzustand das Bandbefestigungsbauteil (24) unter dem Rahmenbauteil positioniert ist, um das Rahmenbauteil zu stützen.

4. Kombination aus einer Fahrzeugsitzvorrichtung und einem Fahrzeugboden nach Anspruch 3,
wobei das Rahmenbauteil des Sitzpolsters (12) mit einem Kontaktbauteil versehen ist, das sich vom Rahmenbauteil nach unten erstreckt und im Verstauzustand am Bandbefestigungsbauteil (24) anstoßen kann,
das Stützen des hinteren Teils des Sitzpolsters (12) durch Stützen des Kontaktbauteils mit dem Bandbefestigungsbauteil (24) erfolgt und
ein Abschnitt des Bandbefestigungsbauteils (24), an dem das Lagekontrollband (30) befestigt ist, anders als ein Abschnitt des Bandbefestigungsbauteils (24) liegt, an dem das Kontaktbauteil anstößt.

5. Kombination aus einer Fahrzeugsitzvorrichtung und einem Fahrzeugboden nach Anspruch 4,
wobei das Kontaktbauteil an einem Mittelteil in Längsrichtung des Rahmenbauteils vorgesehen ist und
das Stützen des hinteren Teils des Sitzpolsters (12) durch Stützen eines Mittelteils in Längsrichtung des Rahmenbauteils über das Kontaktbauteil mit dem Bandbefestigungsbauteil (24) erfolgt.

6. Kombination aus einer Fahrzeugsitzvorrichtung und einem Fahrzeugboden nach Anspruch 4 oder 5,
wobei sich das Bandbefestigungsbauteil (24) aus einem elastischen Bauteil zusammensetzt und aufweist:
ein Fußteil, das sich vom Bodenteil (18) oder von der Halterung nach oben erstreckt; und
ein Stützteil, das sich vom Fußteil nach hinten erstreckt, an dem das Lagekontrollband (30) befestigt ist und an dem das Kontaktbauteil anstößt.

7. Kombination aus einer Fahrzeugsitzvorrichtung und einem Fahrzeugboden nach Anspruch 6,
wobei das Fußteil so schräg ansteigt, dass mit zunehmender Höhe seines Abschnitts es weiter nach hinten zurückweicht, und sich das Stützteil parallel zum Bodenteil (18) erstreckt.

8. Kombination aus einer Fahrzeugsitzvorrichtung und einem Fahrzeugboden nach einem der Ansprüche 4 bis 7,
wobei ein Befestigungsteil, an dem das andere Längsende des Lagekontrollbands (30) befestigt ist, am Rahmenbauteil vorgesehen ist.

9. Kombination aus einer Fahrzeugsitzvorrichtung und einem Fahrzeugboden nach Anspruch 8,
wobei das Befestigungsteil, an dem das andere Ende befestigt ist, an einer Position des Rahmenbauteils vorgesehen ist, die in dessen Längsrichtung vom Kontaktbauteil abweicht.

10. Kombination aus einer Fahrzeugsitzvorrichtung und einem Fahrzeugboden nach einem der Ansprüche 1 bis 9,
wobei das Sitzpolster (12) mit einem Anschlag auf seiner vorderen Rückfläche versehen ist und im Verstauzustand an seinem vorderen Teil durch den Anschlag gestützt wird, der am Bodenteil (18) anstößt.

## Revendications

1. Combinaison d'un dispositif de siège de véhicule et d'un plancher de véhicule sur lequel le dispositif de siège de véhicule est disposé, dans laquelle le plancher de véhicule comporte une partie de plancher (18) et une partie de plateau (20) qui occupe une partie arrière de la partie de plancher (18) composant le plancher de véhicule et a un niveau de plancher élevé à partir du dessus de la partie de plancher (18), comprenant :
un siège (10) mobile entre un état de service dans lequel le siège (10) est placé sur la partie de plateau (20) de manière à permettre à un occupant d'être assis, et un état rangé dans lequel le siège (10) est rangé dans la partie de plancher (18), avec un dossier de siège (14) replié sur un coussin de siège (12) ;
une jambe d'appui (16) ayant une extrémité couplée de manière pivotante à la partie de plancher (18) et l'autre extrémité couplée de manière pivotante au coussin de siège (12), maintenue relevée à l'état de service, entre-temps basculé vers l'avant et maintenue couchée à l'état rangé ; et
une sangle de contrôle d'orientation (30) qui est tendue entre le côté de la partie de plancher et une extrémité arrière du coussin de siège (12), et qui limite une inclinaison du siège (10) lorsque le siège (10) est bougé,
la partie de plancher (18) étant pourvue d'un élément de fixation de sangle (24) auquel une extrémité longitudinale de la sangle de contrôle d'orientation (30) est fixée, et
l'élément de fixation de sangle (24) étant configuré pour supporter une partie arrière du coussin de siège (12) à l'état rangé.

2. Combinaison d'un dispositif de siège de véhicule et d'un plancher de véhicule selon la revendication 1,
dans laquelle la partie de plancher (18) est pourvue d'une attache à laquelle la jambe d'appui (16) est fixée,
une extrémité de la jambe d'appui (16) est couplée de manière pivotante au moyen de l'attache à la partie de plancher (18), et
l'élément de fixation de sangle (24) est prévu sur l'attache.

3. Combinaison d'un dispositif de siège de véhicule et d'un plancher de véhicule selon la revendication 1 ou 2,
dans laquelle le coussin de siège (12) est pourvu d'un élément de cadre qui s'étend dans la direction de la largeur de véhicule, et
l'élément de fixation de sangle (24) à l'état rangé est positionné en dessous de l'élément de cadre pour supporter l'élément de cadre.

4. Combinaison d'un dispositif de siège de véhicule et d'un plancher de véhicule selon la revendication 3,
dans laquelle l'élément de cadre du coussin de siège (12) est pourvu d'un élément de contact qui s'étend vers le bas à partir de l'élément de cadre, et qui est capable de venir en butée contre l'élément de fixation de sangle (24) à l'état rangé,
le support de la partie arrière du coussin de siège (12) est réalisé en supportant l'élément de contact avec l'élément de fixation de sangle (24), et
une portion de l'élément de fixation de sangle (24) où la sangle de contrôle d'orientation (30) est fixée est située différemment d'une portion de l'élément de fixation de sangle (24) où l'élément de contact est en butée.

5. Combinaison d'un dispositif de siège de véhicule et d'un plancher de véhicule selon la revendication 4,
dans laquelle l'élément de contact est prévu dans une partie du milieu, dans la direction longitudinale, de l'élément de cadre, et
le support de la partie arrière du coussin de siège (12) est réalisé en supportant une partie du milieu, dans la direction longitudinale, de l'élément de cadre au moyen de l'élément de contact avec l'élément de fixation de sangle (24).

6. Combinaison d'un dispositif de siège de véhicule et d'un plancher de véhicule selon la revendication 4 ou 5,
dans laquelle l'élément de fixation de sangle (24) est composé d'un élément élastique, et a :
une partie de jambe qui s'étend vers le haut à partir de la partie de plancher (18) ou à partir de l'attache ; et
une partie de support qui s'étend vers l'arrière à partir de la partie de jambe à laquelle la sangle de contrôle d'orientation (30) est fixée, et contre laquelle l'élément de contact est en butée.

7. Combinaison d'un dispositif de siège de véhicule et d'un plancher de véhicule selon la revendication 6,
dans laquelle la partie de jambe s'élève obliquement vers le haut de telle manière que plus sa portion est élevée, plus elle se renfonce vers l'arrière, et la partie de support s'étend en parallèle à la partie de plancher (18).

8. Combinaison d'un dispositif de siège de véhicule et d'un plancher de véhicule selon l'une quelconque des revendications 4 à 7,
dans laquelle une partie de fixation, à laquelle l'autre extrémité longitudinale de la sangle de contrôle d'orientation (30) est fixée, est prévue sur l'élément de cadre.

9. Combinaison d'un dispositif de siège de véhicule et d'un plancher de véhicule selon la revendication 8,
dans laquelle la partie de fixation à laquelle l'autre extrémité est fixée est prévue à une position de l'élément de cadre déviée dans la direction longitudinale de celui-ci par rapport à l'élément de contact.

10. Combinaison d'un dispositif de siège de véhicule et d'un plancher de véhicule selon l'une quelconque des revendications 1 à 9,
dans laquelle le coussin de siège (12) est pourvu d'un butoir sur la face postérieure avant de celui-ci, et est supporté à l'état rangé sur la partie avant de celui-ci par le butoir en butée sur la partie de plancher (18).
